Europäisches Patentamt

European Patent Office

Office européen des brevets

(11) Veröffentlichungsnummer : **0 403 755 B1**

# (12) EUROPÄISCHE PATENTSCHRIFT

(45) Veröffentlichungstag der Patentschrift :
**23.12.92 Patentblatt 92/52**

(51) Int. Cl.$^5$ : **C01B 17/22**

(21) Anmeldenummer : **90107316.3**

(22) Anmeldetag : **18.04.90**

(54) **Verfahren zur Herstellung von Natriummonosulfid.**

(30) Priorität : **22.04.89 DE 3913257**

(43) Veröffentlichungstag der Anmeldung :
**27.12.90 Patentblatt 90/52**

(45) Bekanntmachung des Hinweises auf die
Patenterteilung :
**23.12.92 Patentblatt 92/52**

(84) Benannte Vertragsstaaten :
**BE DE ES FR GB IT**

(56) Entgegenhaltungen :
**EP-A- 0 177 671**
**DE-C- 590 278**
**GB-A- 2 175 292**
**CHEMICAL ABSTRACTS, vol. 102, no. 16, April
1985 Columbus, Ohio, USA V.F. Zinchenko et
al.: "Sodium polysulfide." Seite 135;ref. no.
134386 P and SU-A-1129186**
**Synth. React. Inorg. Met.-Org. Chem. vol. 14,
no. 7, 1984, Seiten 945 - 951; A.P. Brown et al.:
"The direct synthesis ofsodium polysulfides
from sodium and sulfur."**

(73) Patentinhaber : **Degussa Aktiengesellschaft
Weissfrauenstrasse 9
W-6000 Frankfurt am Main 1 (DE)**

(72) Erfinder : **Bittner, Friedrich, Dr.
Mozartstrasse 38
W-6232 Bad Soden (DE)**
Erfinder : **Hinrichs, Walter, Dr.
Alte Bohle 15
W-5040 Brühl (DE)**
Erfinder : **Hippe, Lutz, Dr.
Waldenser Strasse 3
W-6105 Ober-Ramstadt (DE)**
Erfinder : **Lange, Ludwig, Dr.
Mühlenbach 40
W-5040 Brühl (DE)**
Erfinder : **Splett, Erich
Im Bachholz 4
W-5030 Hürth-Berrenrath (DE)**

## Beschreibung

Die Erfindung betrifft ein Verfahren zur Herstellung von Natriummonosulfid durch Umsetzung von Natrium und Schwefel unter Schutzgas.

Natriummonosulfid $Na_2S$ ist ein wichtiges Reagenz zur Einführung von Schwefel in organische Moleküle. Es sind mehrere Verfahren bekannt, nach denen diese Verbindung hergestellt werden kann. Sie ist z. B. erhältlich durch Umsetzung von Natriumsalzen mit Schwefelwasserstoff in wäßrigen oder alkoholischen Lösungen oder durch Reduktion von Natriumsulfat mit Kohlenstoff oder Wasserstoff. Den bekannten Verfahren ist gemeinsam, daß stets mit Reaktionspartnern verunreinigte Produkte anfallen, die durch Lösen in geeigneten Lösungsmitteln und Filtrieren von den Verunreinigungen getrennt werden müssen.

Da die Elemente Natrium und Schwefel äußerst heftig miteinander reagieren (Bildungsenthalpie für $Na_2S$: $\Delta H_B$ = -389,1 kJ/Mol) konnte bislang eine Herstellung direkt aus den auf dem Markt in großer Reinheit erhältlichen Elementen nicht zum technischen Einsatz gelangen.

Wasserfreies $Na_2S$ in ausreichend reiner Form war nur durch Entwässern des Hydrats $Na_2S \cdot 9H_2O$ unter Wasserstoffatmosphäre zugänglich, wobei dieses Hydrat durch Umsetzung von Natriumhydrogensulfid mit NaOH in einem polaren Lösungsmittel hergestellt werden mußte (Kirk-Othmer, 3. Aufl. (1982) Vol. 18, Seiten 793 - 847, insbesondere Seiten 803 und 809).

In der DE-A- 34 36 698 ist ein Verfahren zur Herstellung von Natriumpolysulfiden aus den Elementen Natrium und Schwefel bekannt, bei dem man das Natrium und den Schwefel unter Schutzgas in einem dem gewünschten Polysulfid entsprechenden stöchiometrischen Verhältnis abwechselnd in eine vorgelegte Schmelze eines Polysulfids unter kräftigem Rühren in derart bemessenen Portionen eindosiert, daß beim Natriumeintrag die Reaktionsmischung im Zustand einer rührfähigen Suspension verbleibt, und daß man beim Eintrag des Schwefels diesen jeweils vollständig zu einem Polysulfid eines höheren Schwefelgehaltes abreagieren läßt.

Grundsätzlich wäre es nach diesem Verfahren auch möglich, Natriummonosulfid zu gewinnen, indem man für den gebundenen Schwefel und das Natrium das erforderliche stöchiometrische Verhältnis vorsieht. Da das genannte Verfahren jedoch eine Schmelze als Reaktionsmedium voraussetzt, die zumindest im Endstadium der Umsetzung aus $Na_2S$ allein besteht, würde infolge des sehr hohen Schmelzpunkts dieser Verbindung (1180 - 1200° C) und wegen der starken chemischen Aggressivität der Schmelze kaum ein wirtschaftlich erschwinglicher Reaktorwerkstoff zur Verfügung stehen.

Der Erfindung liegt daher die Aufgabe zugrunde, einen Herstellungsweg zu finden, mit dem sich aus den Elementen Natrium und Schwefel unter Verzicht auf ein in der Reaktion in schmelzflüssiger Form vorliegendes Reaktionsmedium und unter Anwendung relativ niedrig liegender Reaktionstemperaturen hochprozentiges Natriummonosulfid auf wirtschaftliche Weise herstellen läßt.

Diese Aufgabe wird erfindungsgemäß gelöst durch ein Verfahren zur Herstellung von Natriummonosulfid durch Umsetzung von Natrium und Schwefel unter Schutzgas, bei dem man in einer ersten Stufe Natriummonosulfid, welches gegebenenfalls Natriumpolysulfid enthält, in feinverteiltem festen Zustand vorlegt, das Ausgangsmaterial auf 120 - 150° C vorheizt und unter intensiven Mischen, vorzugsweise unter Kneten und/oder Mahlen, abwechselnd flüssigen oder feinverteilten festen Schwefel und schmelzflüssiges Natrium im erforderlichen Mengenverhältnis zusetzt, wobei die Temperatur des Reaktionsgemisches auf 120 - 250, vorzugsweise 140 - 200° C gehalten wird und in einer zweiten Stufe das gebildete, blauschwarz gefärbte Vorprodukt unter Fortsetzen des Mischens solange bei 250 - 480, vorzugsweise 350 - 400° C nachreagieren läßt, bis unter Hellfärbung ein $Na_2S$-Gehalt von mindestens 95 Gew.% erreicht ist.

Als Schutzgas wird Inertgas, bevorzugt Argon, eingesetzt. Von Bedeutung ist auch hier die Wahl des richtigen Reaktorwerkstoffs. Gemäß einer vorteilhaften Ausführungsform der Erfindung führt man die Umsetzung in einem Reaktor durch, dessen mit dem Reaktionsgemisch in Berührung kommende Teile aus Aluminiumlegierungen, insbesondere AlMg3 oder AlMn oder Sinterkorund oder SiC oder aus Glaskohlenstoff bestehen oder mit diesen Werkstoffen ummantelt bzw. ausgekleidet sind.

Eine besonders wichtige Maßnahme in dem erfindungsgemäßen Verfahren ist die Anwendung solcher Mischeinrichtungen, mit denen das im Verlaufe der Umsetzung verschiedene Konsistenzstufen durchlaufende Reaktionsgemisch möglichst intensiv zerkleinert und durchmischt werden kann. Besonders brauchbar haben sich Einrichtungen mit Knet- und/oder Mahlwirkung erwiesen. Beispiele sind Trogkneter mit gegenläufigen Knetschaufeln, Rührwerkskugelmühlen.

Bei Knetern sollten die Knetflächen stets von vorgelegtem Natriummonosulfid (im Ausgangsstadium der Reaktion) bzw. vom gebildeten, dunkel bis grau gefärbten Vorprodukt (bei fortgeschrittener Umsetzung) überdeckt werden, um eine Korrosion durch das aggressive Reaktionsgemisch zu vermeiden.

Der Reaktorinhalt durchläuft bei Durchführung des Verfahrens verschiedene charakteristische Stadien von Konsistenz und Färbung:

Bei Verwendung von vorfabriziertem $Na_2S$ als vorgelegtes Reaktionsmedium wird dieses für die 1. Verfahrensstufe als feinteiliges Pulver vorgelegt.

Bei der abwechselnden Zugabe der Reaktanden Schwefel und Natrium treten jeweils charakteristische Farbänderungen im Reaktionsgemisch auf:

Nach Schwefelzugabe verfärbt sich das Reaktionsgemisch nach blauschwarz, nach Natriumzugabe grau; die Pulverform bleibt während der gesamten Umsetzungsdauer erhalten.

Nach Eintrag der erforderlichen Menge der Reaktanden und Umsetzung in der 1. Stufe resultiert ein blauschwarzes Pulver.

In der 2. Verfahrensstufe, dem unter fortwährendem zerkleinernden Mischen ablaufenden Erhitzen auf 250 - 480° C bleibt die pulvrige Beschaffenheit des Reaktorinhalts bestehen und es erfolgt ein Farbübergang von blauschwarz nach weiß.

Das erfindungsgemäße Verfahren nimmt, im Unterschied von dem eingangs abgehandelten Verfahren zur Herstellung von Natriumpolysulfiden bewußt die Ansammlung von ungeschmolzener Festsubstanz im Reaktionsmedium in Kauf und läßt bei Temperaturen, die weit unter dem Schmelzpunkt des Endprodukts liegen, Umsätze bis ca. 97 % der Theorie zu.

Aus dem erhaltenen hochprozentigen Natriummonosulfid läßt sich durch Zusammenschmelzen mit entsprechenden Mengen Schwefel natürlich auch jedes gewünschte Polysulfid erhalten.

Die Erfindung wird nachfolgend anhand eines Ausführungsbeispiels weiter erläutert.

Beispiel

Eine Laborknetmaschine mit einem aus zwei Halbzylindern gebildeten Trog aus V4A mit polierten Innenwänden war mit zwei polierten Schaufeln aus V4A in Sigma-Form, die jeweils auf einer eigenen Antriebswelle montiert waren, ausgerüstet.

Der Trogunterteil besaß einen Doppelmantel zur Aufnahme eines Wärmeträgermediums. Der aufgeschraubte Deckel aus V4A war mit einem Stutzen, der mit einer Schraubkappe verschlossen werden konnte, und einem unmittelbar unter dem Deckel endenden Einleitungsrohr für das Schutzgas Argon versehen. Durch den Stutzen wurden sowohl Natrium und Schwefel eingefüllt, als auch das Vorprodukt entnommen.

Die Schaufeldrehzahl konnte variiert werden zwischen 40 - 60 Upm. Durch eine der vier Seitenwände war parallel zu den Wellen, auf denen die Schaufeln montiert waren, ein Temperaturfühlerschutzrohr aus V4A in den Trog bzw. Reaktionsraum eingeführt. Die lichte Länge des Troges betrug 100 mm, seine lichte Breite 117 mm und seine lichte Tiefe 110 mm. Das Nutzvolumen dieses Trogs war 750 ml. Dementsprechend konnte dieser Trog ca. 500 g Vorprodukt aufnehmen.

Vor Beginn der chargenweisen Produktion wurde der Trog aufgeheizt, wobei dessen Unterteil mit Wärmeträgeröl mit einer Temperatur von 160° C beaufschlagt wurde. Mit ca. 20 l Argon pro Stunde wurde der Trog gespült. Danach wurden 150 g Natriummonosulfid $Na_2S$ eingefüllt. Durch den mit einer Schraubkappe verschließbaren Stutzen wurde abwechselnd schmelzflüssiges Natrium und Schwefel in Pulverform in das feingemahlene Natriummonosulfid dosiert.

Die Natriummenge pro Portion betrug 10 g. Entsprechend dem stöchiometrischen Verhältnis war die Schwefelmenge ca. 7 g. Insgesamt wurden 123,4 g Schwefel und 117 g Natrium in den Kneter eingebracht. Die Dosierung von Natrium und Schwefel wurde so gesteuert, daß die Temperatur im Reaktionsraum nicht höher als 170° C stieg.

Während der portionsweisen Zugabe der beiden Elemente Natrium und Schwefel über einen Zeitraum von ca. 4 h blieb die Schaufeldrehzahl konstant bei 50 Upm. Nach Abkühlung des erhaltenen Vorprodukts wurde eine Probe entnommen.

Die Analyse ergab:

58,9 Gew.% Gesamtnatrium (theoret. 59,0 %)

41,0 Gew.% Gesamtschwefel (theoret. 41,0 %)

Von dem Gesamtschwefel liegen im Vorprodukt 38,0 Gew.% Schwefel in Form des Sulfids vor. Die Sulfidbestimmung erfolgte jodometrisch. Der Gesamtschwefelgehalt wurde nach Oxidation des Schwefels mit $H_2O_2$ im alkalischen Medium zum Sulfat gravimetrisch als $BaSO_4$ bestimmt.

Der Gesamtnatriumgehalt wurde flammenphotometrisch ermittelt. Natrium, das nicht an der Reaktion teilgenommen hatte, wurde gasvolumetrisch erfaßt. Hierbei wurde ein Anteil von 5,0 Gew.%, bezogen auf die Gesamtmischung, gefunden. Das Vorprodukt, das mehr als 85 Gew.% Natriummonosulfid enthielt, wurde zur Nachreaktion der noch nicht zum Sulfid reagierten Bestandteile Natrim und Schwefel in einen Laborreaktor eingebracht, der bis ca. 400° C hochgeheizt werden konnte.

Der zylindrische Laborreaktor aus der Aluminiumlegierung $AlMg_3$ mit ebener Bodenplatte hatte einen aufgeflanschten Deckel ebenfalls aus AlMg3 mit einem durch Schraubkappe verschließbaren Stutzen, einem unter dem Deckel endenden Einleitungsrohr für das Schutzgas Argon, einem Temperaturfühlerschutzrohr und einer Stopfbuchse im Deckel zur Durchführung der mit AlMg3 umkleideten, vertikal stehenden Flügelrührerwelle, auf der die Rührblätter aus AlMg3 befestigt waren. Der Reaktor hatte eine lichte Höhe von 150 mm und eine lichte Weite von ebenfalls 150 mm.

Um eine optimale Rührwirkung im Laborreaktor zu erreichen, mußte die Menge von 300 g Reaktionsmischung verdoppelt werden. Daher wurde die gleiche Menge in der eben beschriebenen Art und Weise in der Laborknetmaschine noch einmal hergestellt.

Nach Einfüllen von 600 g des schwarzen, pulverförmigen Vorprodukts aus den 2 Ansätzen wurde der am Mantel mit einer Wärmedämmung versehene Reaktor auf eine stufenlos heizbare elektrische Platte gesetzt und im Verlauf von 1,5 h gleichmäßig auf 370° C hochgeheizt. Während des Aufheizens wurde das Vorprodukt intensiv gerührt. Die Drehzahl des Rührers wurde auf 100 Upm eingestellt. Hierzu war ein starker Rührmotor erforderlich, da das Vorprodukt ab 300° C zum Verklumpen neigt. Mit einem Inertgasstrom von 30 l pro Stunde wurde der Reaktor während des Aufheizens bzw. der Nachraktion gespült.

Nach dem Abkühlen wurde das nunmehr weiße Endprodukt dem Reaktor entnommen und gesiebt. Die Maschenweite des Siebes betrug 0,355 mm. Etwa 70 % des durchgesiebten Reaktionsproduktes wurde so als homogenes, weißes Pulver gewonnen.

Die Analyse ergab folgende Zusammensetzung:

58,8 Gew.% Na (theoret. 58,97 Gew.%)

41,2 Gew.% S (theoret. 41,03 Gew.%)

Die grobkörnige Fraktion (Siebrückstand) hatte die Zusammensetzung $Na_2S$; hinsichtlich des Schwefelgehalts der einzelnen Körner war sie jedoch inhomogen, d. h. die Körner enthielten teilweise geringe Mengen an Polysulfid (ca. 1 - 5 Gew.%).

Aus dem eben Beschriebenen ergibt sich folgende Mengenbilanz:

```
Vorlage im Kneter (insgesamt):        150,0 g Na₂S₄

Natriumzugabe (insgesamt):            359,0 g Natrium

Schwefelzugabe (insgesamt):           246,8 g Schwefel

Produktion an Vorprodukt:             600 g

Vorlage im Laborreaktor:              600 g Vorprodukt

Entnahme aus Laborreaktor:            600 g Endprodukt


Siebfraktion < 0,355 mm:        420 g Natriummonosulfid Na₂S


Rest an inhomogener Kornfraktion > 0,355 mm: 180 g
```

Die inhomogene Kornfraktion > 0,355 mm aus dem Verfahren zur Herstellung von $Na_2S$ wurde gesammelt und dem Kneter für die erste Umsetzungsstufe zugeführt. Nach einer Stunde Mahlen bei 50 Upm unter Argonatmosphäre wurde ein feinteiliges Pulver erhalten, das als Vorlage im Kneter für einen neuen Ansatz verwendbar ist.

**Patentansprüche**

1. Verfahren zur Herstellung von Natriummonosulfid durch Umsetzung von Natrium und Schwefel unter Schutzgas,
   **dadurch gekennzeichnet,**
   daß man in einer ersten Stufe Natriummonosulfid, welches gegebenenfalls Natriumpolysulfid enthält, in feinverteiltem festen Zustand vorlegt, das Ausgangsmaterial auf 120 - 150° C vorheizt und unter intensiven Mischen, vorzugsweise unter Kneten und/oder Mahlen, abwechselnd flüssigen oder feinverteilten festen Schwefel und schmelzflüssiges Natrium im erforderlichen Mengenverhältnis zusetzt, wobei die Temperatur des Reaktionsgemisches auf 120 - 250, vorzugsweise 140 - 200° C gehalten wird und in einer zweiten Stufe das gebildete, blauschwarz gefärbte Vorprodukt unter Fortsetzen des Mischens solange bei 250 - 480, vorzugsweise 350 - 400° C nachreagieren läßt, bis unter Hellfärbung ein Na$_2$S-Gehalt von mindestens 95 Gew.% erreicht ist.

## Claims

1. A process for the production of sodium monosulfide by reaction of sodium and sulfur in an inert gas atmosphere, characterized in that, in a first stage, sodium monosulfide optionally containing sodium polysulfide is introduced in finely divided solid form, the starting material is preheated to 120 to 150°C and liquid or finely divided solid sulfur and molten sodium in the necessary quantitative ratio are alternately added with intensive mixing, preferably with kneading and/or grinding, the temperature of the reaction mixture being kept at 120 to 250°C and preferably at 140 to 200°C, and in a second stage the blue-black coloured intermediate product formed is left to after-react with continued mixing at 250 to 480°C and preferably at 350 to 400°C until an Na$_2$S content of at least 95% by weight is reached with lightening of the colour.

## Revendications

1. Procédé d'obtention du monosulfure de sodium par mise en réaction du sodium et du soufre sous gaz protecteur caractérisé en ce que l'on introduit dans une première étape du monosulfure de sodium qui contient le cas échéant du polysulfure de sodium, à l'état solide finement divisé, que l'on pré-chauffe le produit de départ à 120 - 150°C et que l'on ajoute sous agitation intensive - de préférence sous malaxage et/ou broyage, alternativement du soufre liquide ou solide finement divisé et du sodium liquide de fusion en rapport quantitatif nécessaire, tandis que la température du mélange réactionnel est maintenue à 120 - 250°C, de préférence à 140 - 200°C et que l'on fait réagir finalement dans une deuxième étape le produit préliminaire formé, coloré en bleu-noir, en continuant le mélange à 250 - 480°C - de préférence à 350 - 400°C jusqu'à ce qu'une teneur en Na$_2$S d'au moins 95 % en poids soit atteinte avec apparition d'une coloration claire.